(19) Europäisches Patentamt / European Patent Office / Office européen des brevets

(11) **EP 4 170 575 A1**

(12) **EUROPEAN PATENT APPLICATION**
published in accordance with Art. 153(4) EPC

(43) Date of publication:
**26.04.2023 Bulletin 2023/17**

(21) Application number: **21827927.1**

(22) Date of filing: **05.03.2021**

(51) International Patent Classification (IPC):
**G06Q 50/06** (2012.01)

(52) Cooperative Patent Classification (CPC):
**G06Q 50/06**

(86) International application number:
**PCT/JP2021/008830**

(87) International publication number:
**WO 2021/261026 (30.12.2021 Gazette 2021/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.06.2020 JP 2020107464**

(71) Applicant: **Hitachi, Ltd.**
**Tokyo 100-8280 (JP)**

(72) Inventors:
• **ARAI Keisuke**
**Tokyo 100-8280 (JP)**
• **KOIZUMI Kenji**
**Tokyo 100-8280 (JP)**
• **TAKAHASHI Shinsuke**
**Tokyo 100-8280 (JP)**

(74) Representative: **MERH-IP Matias Erny Reichl Hoffmann**
**Patentanwälte PartG mbB**
**Paul-Heyse-Strasse 29**
**80336 München (DE)**

(54) **ASSET VALUE ASSESSMENT SYSTEM AND ASSET VALUE ASSESSMENT METHOD**

(57) An asset value assessment system for assessing an asset value of a pipeline includes a control unit configured to execute predetermined arithmetic processing and a storage device accessible by the control unit. The storage device is configured to store a database including attribute information of the pipeline, water supply unit price information, and cost information including a laying cost and a maintenance and management cost of the pipeline. The control unit is configured to calculate an expected profit of the pipeline using the attribute information and the supply unit price information, calculate a life cycle cost of the pipeline using the attribute information and the cost information, and assess the asset value of the pipeline based on the expected profit and the life cycle cost.

[FIG. 1]

EP 4 170 575 A1

**Description**

Incorporation by Reference

The present application claims priority from Japanese Patent Application No. 2020-107464 filed on June 23, 2020, contents of which are incorporated into the present application by reference.

Technical Field

The present invention relates to an asset value assessment system and an asset value assessment method for assessing an asset value of a pipeline.

Background Art

Water providers are required to stably supply safe water to consumers. Meanwhile, the water providers need to use an income obtained by supplying the water to renew aging pipelines and repair leaks to properly manage pipelines buried underground and continue sound business management over a long period of time.

In this regard, PTL 1 (JP2015-90641A) and PTL 2 (JP2016-33808A) disclose a pipeline renewal plan drafting support system and a pipeline renewal plan drafting support method for supporting drafting of a pipeline renewal plan by which a life cycle cost of a pipeline is minimized in order to determine a renewal time of an aging pipeline.

Summary of Invention

Technical Problem

A pipeline is one of assets held by the water providers because the pipeline is repaired or renewed and used over a long period of time, using the income obtained by supplying the water to the consumers. Therefore, for example, when outsourcing part of a water supply business such as pipeline management to a private company, it is desirable for both an outsourcer and a trustee to accurately grasp an asset value of a pipeline, more specifically, an income and an expenditure that the pipeline is to bring in the future.

However, since the pipeline is buried underground, it is difficult to grasp a current situation, and the income and the expenditure that the pipeline is to bring in the future cannot be easily predicted. As a result, it is difficult to assess a current asset value of the pipeline. Such a situation is not preferred for performing long-term sound water supply business, especially for performing water supply business in cooperation with a private company.

In view of the above problems, an object of the invention is to provide an asset value assessment system and an asset value assessment method for assessing an asset value of a pipeline, especially a current asset value of the pipeline, based on an expected profit and a life cycle cost of the pipeline that are calculated based on attribute information, past cost information, and the like of the pipeline.

Solution to Problem

A representative example of the invention disclosed in the present application is as follows. That is, an asset value assessment system for assessing an asset value of a pipeline includes a control unit configured to execute predetermined arithmetic processing and a storage device accessible by the control unit. The storage device is configured to store a database including attribute information of the pipeline, water supply unit price information, and cost information including a laying cost and a maintenance and management cost of the pipeline. The control unit is configured to calculate an expected profit of the pipeline using the attribute information and the supply unit price information, calculate a life cycle cost of the pipeline using the attribute information and the cost information, and assess the asset value of the pipeline based on the expected profit and the life cycle cost.

Advantageous Effects of Invention

According to one aspect of the invention, the asset value of the pipeline can be assessed appropriately. Problems, configurations, and effects other than those described above will be clarified according to the following description of embodiments.

Brief Description of Drawings

[FIG. 1] FIG. 1 is a diagram showing an example of a configuration of an asset value assessment system.
[FIG. 2] FIG. 2 is a diagram showing an example of pipeline attribute information.
[FIG. 3] FIG. 3 is a diagram showing an example of water leakage accident information.
[FIG. 4] FIG. 4 is a diagram showing an example of accident rate model coefficient information.
[FIG. 5] FIG. 5 is a diagram showing an example of laying and repair cost information.
[FIG. 6] FIG. 6 is a diagram showing an example of water leakage loss amount information.
[FIG. 7] FIG. 7 is a diagram showing an example of supply unit price and annual water usage amount information.
[FIG. 8] FIG. 8 is a diagram showing an example of demographic information.
[FIG. 9] FIG. 9 is a flowchart of asset value assessment processing.
[FIG. 10] FIG. 10 is a diagram showing an LCC curve.

Description of Embodiments

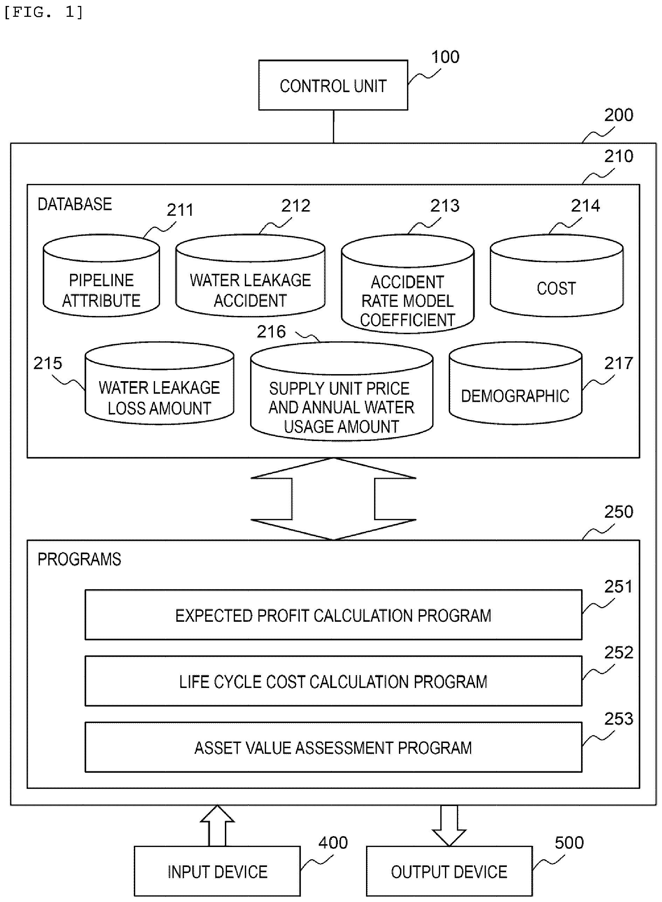

Hereinafter, specific embodiments of an asset value assessment system and an asset value assessment method for a pipeline according to the invention will be described with reference to FIGS. 1 to 9. FIGS. 1 to 9 are shown as examples, and a person skilled in the art can appropriately add a configuration, data, processing, and the like necessary to calculate an expected profit and cost.

FIG. 1 is a diagram showing an example of a configuration of an asset value assessment system according to the present embodiment.

The asset value assessment system according to the present embodiment includes a control unit 100 that executes programs, a storage device 200 that stores programs and data, an input device 400 that input data and instructions, and an output device 500 that output program execution results.

The control unit 100 is an arithmetic device that reads necessary data from the storage device 200, that reads calculation processing programs for executing calculation processing using the read data, and that executes calculation processing by executing the read programs, and outputs an assessment result selected by a user to the output device 500 after the calculation processing. As described above, the control unit 100 executes various programs to achieve each function of the asset value assessment system. The control unit 100 can be implemented by a processor that executes the programs to execute processing, or hardware such as an ASIC and an FPGA.

The storage device 200 includes a memory and an auxiliary storage device. The memory includes a ROM, which is a non-volatile storage element, and a RAM, which is a volatile storage element. The ROM stores invariable programs (for example, a BIOS) and the like. The RAM is a high-speed and volatile storage element such as a dynamic random access memory (DRAM), and temporarily stores programs to be executed by the processor and data to be used when the programs are executed. The auxiliary storage device is, for example, a large-capacity and non-volatile storage device such as a magnetic storage device (HDD) and a flash memory (SSD). In addition, the auxiliary storage device stores data (for example, a database 210) used when the processor executes the programs, and programs 250 executed by the processor. That is, the programs 250 are read from the auxiliary storage device, loaded into the memory, and executed by the processor, thereby achieving each function of the asset value assessment system.

The database 210 includes pipeline attribute information 211, water leakage accident information 212, accident rate model coefficient information 213, laying and repair cost information 214, water leakage loss amount information 215, supply unit price and annual water usage amount information 216, demographic information 217, and the like, and may include other data as necessary.

The programs 250 include an expected profit calculation program 251, a life cycle cost calculation program 252, and an asset value assessment program 253.

The input device 400 is a device that inputs items necessary for calculation of pipeline numbers, discount rates, and the like, and is a man-machine interface such as a keyboard and a mouse. In addition, the input device 400 also includes a network interface that captures data from an external network.

The output device 500 is a device that outputs the program execution results in a visible format for a user, and is a display device or a printer. The output device 500 outputs, for example, an expected profit, a life cycle cost (LCC), an asset value, and the like as assessment results.

The input device 400 and the output device 500 may be provided by a terminal connected to the asset value assessment system via a network.

The programs executed by the processor of the control unit 100 are provided to the asset value assessment system via a removable medium (CD-ROM, flash memory, and the like) or a network, and are stored in a non-volatile auxiliary storage device which is a non-transitory storage medium. Therefore, the asset value assessment system may include an interface for reading data from the removable medium.

The asset value assessment system is a computer system implemented on one physical computer or on a plurality of logical or physical computers, or may be operated on a virtual computer constructed on a plurality of physical computer resources.

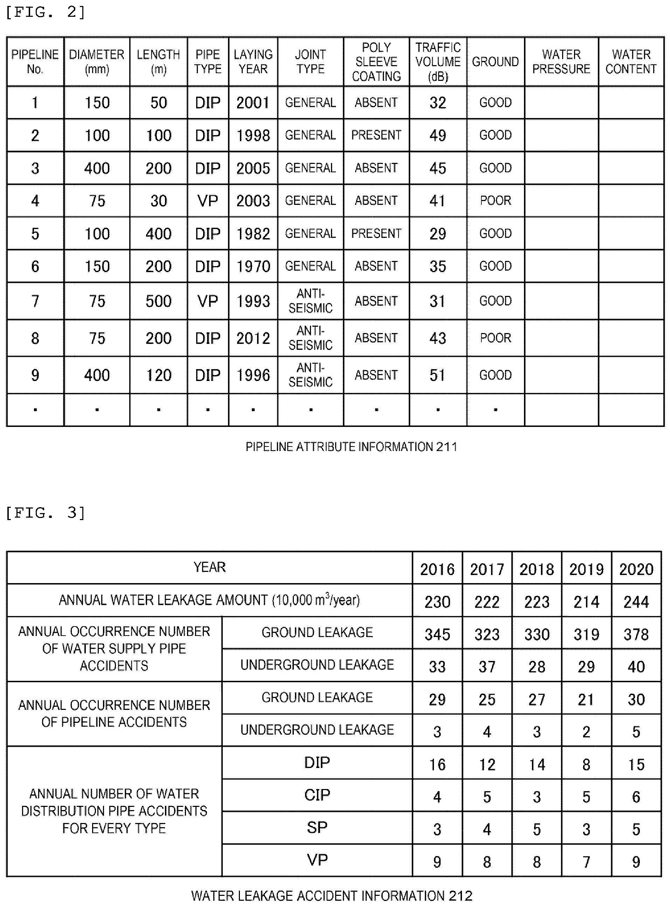

FIG. 2 is a diagram showing an example of pipeline attribute information 211.

The pipeline attribute information 211 includes a pipeline No., a diameter, a length, a pipe type, a laying year, a joint type, and presence/absence of a poly sleeve coating, and further includes a traffic volume, ground, a water pressure, and a water content as geographical factors of a location where the pipeline is laid. As will be described later, since the geographical factors act, the service life of the pipeline is shortened in the cases of a large traffic volume, a poor ground (soft ground), a high water pressure inside the pipeline, or a high water content at the laying location. For example, a pipeline whose pipeline No. = 1 is a pipeline having a diameter of 150 mm, a length of 50 m, a pipe type of DIP, a laying year of 2001, and a general joint type, but having no poly sleeve coating, and is laid in a geographical environment having a traffic volume of 32 dB and good ground.

FIG. 3 is a diagram showing an example of water leakage accident information 212.

The water leakage accident information 212 yearly includes an annual water leakage amount, an annual occurrence number of water supply pipe accidents, an annual occurrence number of pipeline accidents, and an annual number of accidents for every pipe type. The annual occurrence number is recorded separately for ground leakage and underground leakage. For example, in 2016, the annual water leakage amount is 2.3 million m³/year, and the annual number of water supply pipe accidents is 345 for the ground leakage and 33 for the underground leakage. The pipelines for which the above-described annual occurrence numbers are aggregated are mainly water distribution pipes, and water leakage accident information of water intake pipes and water transmission pipes may also be recorded in the water leakage accident information 212, and may be used to calculate the water leakage loss amount and the water leakage loss cost

CL.

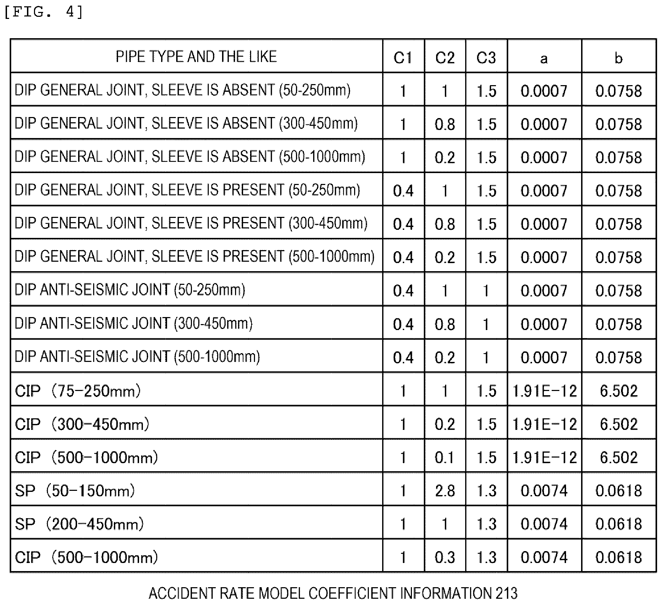

FIG. 4 is a diagram showing an example of accident rate model coefficient information 213.

Accident rate model coefficients stored in the accident rate model coefficient information 213 are constants determined in advance according to the pipe type, the joint type, the diameter, and the like. An accident rate model coefficient may be derived from accidents that have occurred in the past or may be derived by simulation. In addition, the asset value assessment system may execute calculation each time according to the pipe type, the joint type, the diameter, and the like. These constants are used in Equation (6) or (7), which will be described later, to implement a water leakage accident rate f(t) and to determine a running cost.

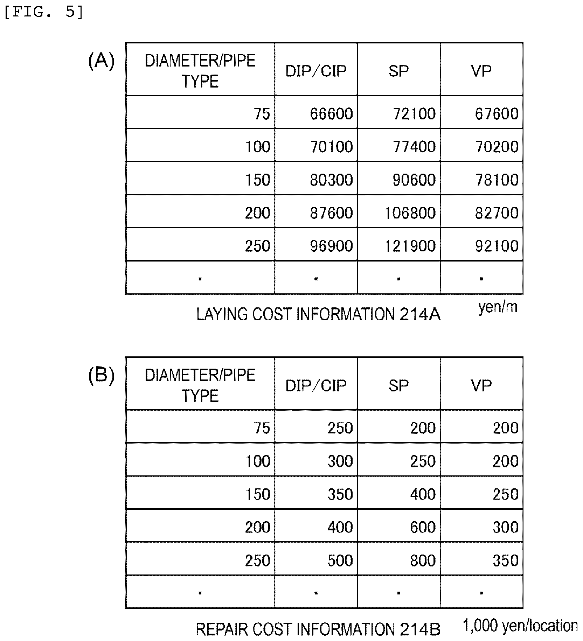

FIG. 5 is a diagram showing an example of laying and repair cost information 214.

For a pipeline, costs required for laying and repair are required for each diameter and pipe type, and (A) a cost required for laying per unit length and (B) a cost required for repair per location are recorded as the cost information 214. As the cost information 214, the costs normally required for each diameter and pipe type in a form of a table as shown in FIG. 5 may be recorded, or actual laying and repair costs for each pipeline may be recorded.

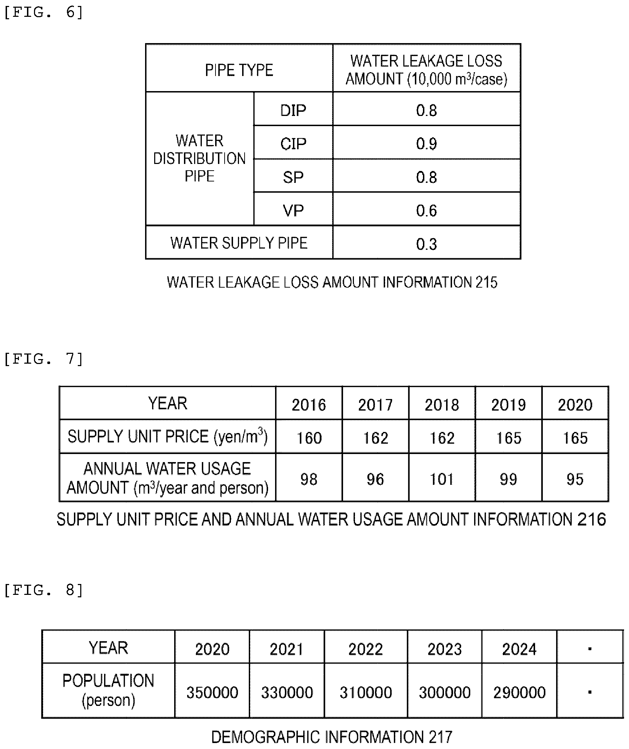

FIG. 6 is a diagram showing an example of water leakage loss amount information 215.

The water leakage loss amount information 215 is calculated by regression analysis using the water leakage accident information 212 shown in FIG. 3 as a parameter, using Equation (4) or (5), which will be described later. The calculated water leakage loss amount is used when calculating the running cost.

FIG. 7 is a diagram showing an example of supply unit price and annual water usage amount information 216.

As the supply unit price and annual water usage amount information 216, actual record values of the water supply unit price and the annual water usage amount are yearly recorded.

FIG. 8 is a diagram showing an example of demographic information 217.

As the demographic information 217, a prediction value of population in a certain district in the future is recorded, and data held by a municipality that manages the pipeline to be assessed can be used. The district can be a predetermined administrative area, such as a city, a town, a village, and a school district.

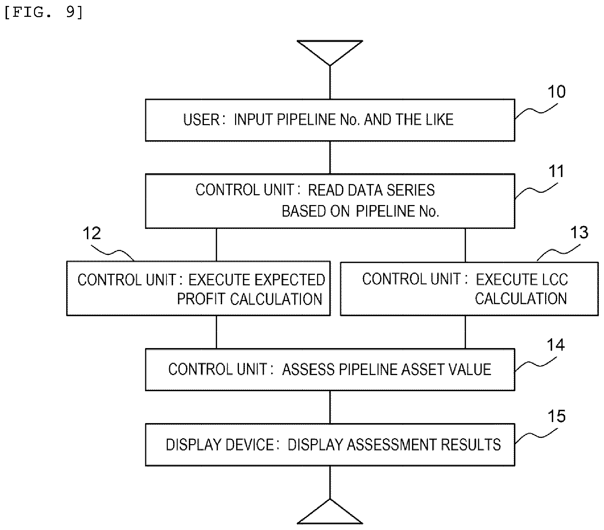

FIG. 9 is a flowchart of asset value assessment processing executed by the control unit 100.

First, the control unit 100 executes the asset value assessment program 253, receives information (for example, the pipeline No.) that uniquely designates a pipeline for which an asset value is to be assessed from a user (10), and reads data of the designated pipeline from the database 210. Then, the control unit 100 calls the expected profit calculation program 251 to calculate an expected profit (12), and calls the life cycle cost calculation program 252 to calculate a life cycle cost (13). The calculation (12) of the expected profit and the calculation (13) of the life cycle cost may be executed in parallel as shown, or may be executed sequentially.

Then, the control unit 100 assesses the asset value of the pipeline using the calculated expected profit and life cycle cost (14), and transmits data for displaying assessment results to the output device 500. The output device 500 visibly outputs the assessment results to the user together with input values (15).

Next, specific calculation methods for the life cycle cost calculation processing (13), the expected profit calculation processing (12), and the asset value assessment processing (14) will be described. The following calculation methods are examples, and other methods may be used as long as the methods are capable of calculating the pipeline cost, the expected profit, and the asset value.

[Calculation Method for Cost C]

The life cycle cost LCC(T) can be calculated by Equation (1).

[Math 1]

$$\text{LCC(T)} = \text{C\_I(T)} + \text{C\_R(T)} \qquad (1)$$

LCC(T): life cycle cost (yen/km and year)
C_I(T): initial cost (yen/km and year)
C_R(T): running cost (yen/km and year)
T: in-service years

The LCC(T) is the sum of the initial cost C_I(T) and the running cost C_R(T). The terms C_I(T) and C_R(T) will be described in detail below.

The initial cost C_I(T) can be calculated by Equation (2) .

[Math 2]

$$C\_I(T) = \frac{CP}{T} \qquad (2)$$

CP: installation and replacement cost (yen/m)

The initial cost C_I(T) can be calculated by dividing a laying cost CP of a target pipeline by the in-service years T. The laying cost CP of the pipeline is determined by referring to the laying cost information 214A (FIG. 5). Specifically, the diameter and pipe type that are recorded in association with the pipeline No. are acquired by referring to the pipeline attribute information 211 (FIG. 2), and a cost per unit length (for example, 1 meter) required for laying is acquired by using the acquired diameter and pipe type and referring to the laying cost information 214A (FIG. 5).

The running cost C_R(T) can be calculated by Equation (3) .

[Math 3]

$$C_{R(T)} = \sum_{t=1 \sim T} \frac{(CL+CR)f(t)}{T} \qquad (3)$$

CL: water leakage loss cost (yen/case)
CR: repair cost (yen/case)
f(t): water leakage accident rate (cases/year and km)

The running cost C_R(T) is calculated by dividing a total running cost from the first year (t = 1) to the Tth year by the in-service years T. The running cost for each year from the first year to the Tth year is calculated by multiplying the sum of the water leakage loss cost CL and the repair cost CR by the water leakage accident rate f(t), which is an increasing function with respect to the passed years t.

The water leakage loss cost CL can be calculated by multiplying the water leakage loss amount in the water leakage loss amount information 215 (FIG. 6) and the supply unit price in the supply unit price and annual water usage amount information 216 (FIG. 7), and the water leakage loss amount information 215 can be calculated by Equation (4) or Equation (5).

The repair cost CR can be acquired from the repair cost information 214B (FIG. 5) using the diameter and the pipe type.

The water leakage loss amount and the water leakage accident rate f(t) will be described below.

In order to calculate the amount of water leakage loss amount, first, coefficients k1 and k2 (10,000 $m^3$/case) representing the water leakage loss amount are calculated by regression analysis using Equation (4) in which data of water leakage amount y (10,000 $m^3$/year), the number of water leakage cases of water supply pipe x1 (cases/year), and the number of water leakage cases of water distribution pipe x2 (cases/year) are substituted.

[Math 4]

$$y = k1 \times x1 + k2 \times x2 \quad (4)$$

y: water leakage amount (10,000 $m^3$/year)
x1: number of water leakage cases of water supply pipe (cases/year)
x2: number of water leakage cases of water distribution pipe (cases/year)

Equation (5) is used instead of Equation (4) when calculating the coefficients for each pipe type. In the same way as described above, the coefficients k1, $k2_{DIP}$, $k2_{CIP}$, $k2_{SP}$, and $k2_{VP}$ are calculated by regression analysis using Equation (5) in which the data of the water leakage amount y, the number of water leakage cases of water supply pipe x1, and the number of water leakage cases of water distribution pipe $x2_{DIP}$, $x2_{CIP}$, $x2_{SP}$, and $x2_{VP}$ are substituted.

[Math 5]

$$y = k1 \times x1 + k2_{DIP} \times x2_{DIP} + k2_{CIP} \times x2_{CIP} + k2_{SP} \times x2_{SP}$$

$$+ k2_{VP} \times x2_{VP} \quad (5)$$

y: water leakage amount (10,000 $m^3$/year)
x1: number of water leakage cases of water supply pipe (cases/year)
$x2_{DIP}$: number of water leakage cases of water distribution pipe DIP (cases/year)
$x2_{CIP}$: number of water leakage cases of water distribution pipe CIP (cases/year)
$x2_{SP}$: number of water leakage cases of water distribution pipe SP (cases/year)
$x2_{VP}$: number of water leakage cases of water distribution pipe VP (cases/year)

Next, the water leakage accident rate f(t) can be calculated by Equation (6) or Equation (7) depending on the pipe type. As coefficients of Equations (6) and (7), the numerical values recorded in the accident rate model coefficient information 213 (FIG. 4) are used.

[Math 6] When the pipe type is DIP or SP

$$yf(t) = a \times e^{bt} \times C1 \times C2 \times C3 \times C4 \times C5 \quad (6)$$

[Math 7] When the pipe type is CIP or VP

$$yf(t) = a \times t^b \times C1 \times C2 \times C3 \times C4 \times C5 \quad (7)$$

a, b: constants depending on pipe type
C1: constant depending on pipe type (joint type and presence and absence of sleeve)
C2: constant depending on diameter
C3: constant depending on ground state
C4: correction factor for correcting differences in accident characteristics for each city
C5: correction factor for correcting differences in accident characteristics in each area of city

Whether to use C4 and C5 may be determined depending on the situation. That is, the calculation may be executed by setting C4 = C5 = 1 in Equations (6) and (7), or the calculation may be executed by considering the correction factors C4 and C5 as appropriate based on the accident characteristics for each city and/or for each area within a city. In addition, C4 and C5 may be changed using factors such as a minimum temperature, a corrosive soil, electric corrosion, and a traffic volume (magnitude of vibration). For example, a threshold for each factor is determined. C4 and C5 are set to 1 when such a factor is below the threshold, and C4 and C5 are set to 1.2 when such a factor exceeds the threshold.

In the accident rate model coefficient information 213 (FIG. 4), a, b, C1, C2, and C3 are recorded.

The demographic information 217 (FIG. 8) may be used for the cost calculation. For example, when the amount of used water decreases due to population decline, the pressure inside the pipelines rises, the number of water leakage accidents increases, and repair costs increase.

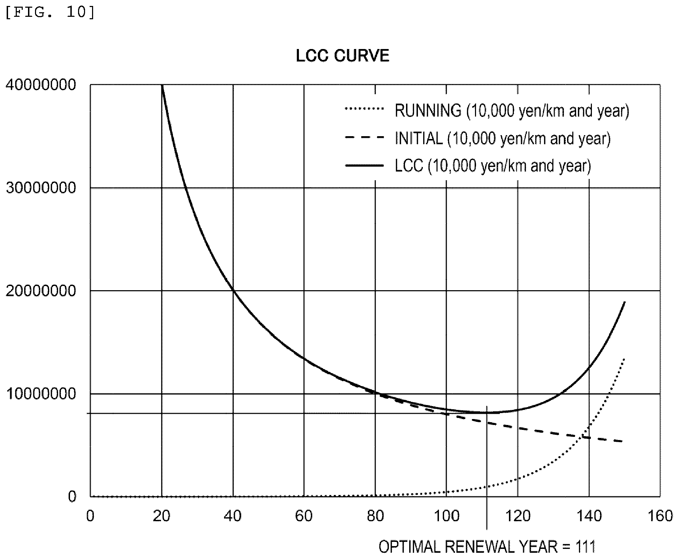

As described above, by calculating the function y = LCC (T) for each pipeline No. using Equations (1) to (7) and drawing an LCC curve (see FIG. 10), an optimal renewal year is obtained in which the LCC is minimized. Then, the calculation end year M is calculated for each pipeline based on the obtained optimal renewal year and a laying year, and the cost C for the remaining service years, that is, the cost C in the future is calculated.

Next, procedures for using a DCF method will be described as an example of the life cycle cost calculation processing (13).

Procedure 1: input of the pipeline No. is received. In addition, input of a discount rate r is also received as needed. The discount rate is a coefficient for converting a future value to a current value, and is determined by considering uncertainty of the asset and interest rates.

Procedure 2: the pipeline attribute information 211 (FIG. 2), the water leakage accident information 212 (FIG. 3), and the supply unit price and annual water usage amount information 216 (FIG. 7) that are associated with the pipeline No. are read out. Then, the coefficients k1 and k2 representing the water leakage loss amount are calculated by the regression analysis using Equation (4) or Equation (5), and the water leakage loss cost (FIG. 6) calculated using the coefficients k1 and k2 and the supply unit price in the supply unit price and annual water usage amount information 216 (FIG. 7) are substituted into Equation (3) to calculate the water leakage loss cost CL.

Procedure 3: the repair cost CR is determined using the diameter and the pipe type that are identified in the pipeline attribute information 211 (FIG. 2) by referring to the repair cost information 214B (FIG. 5).

Procedure 4: the model coefficients a, b, and C1 to C3 are acquired using the diameter and pipe type that are identified in the pipeline attribute information 211 (FIG. 2) by referring to the accident rate model coefficient information 213 (FIG. 4) to determine the water leakage accident rate f(t) using Equation (6) or Equation (7). Then, the running cost C_R(T) is calculated using the calculated CL, CR, and f(t) .

Procedure 5: the laying cost is determined using the diameter and the pipe type that are identified in the pipeline attribute information 211 (FIG. 2) by referring to the repair cost information 214B (FIG. 5). Then, the laying and replacement cost C_I(T) is calculated based on an extension and laying cost of the pipeline.

Procedure 6: an equation of the life cycle cost LCC(T) is determined based on the laying and replacement cost C_I(T) and the running cost C_R(T).

Procedure 7: the optimal renewal year is calculated based on the LCC curve, and the calculation end year M is calculated based on the laying year.

Procedure 8: the procedures 1 to 7 are executed for each pipeline No.

**[0065]** Procedure 9: a total cost required from the present to the optimal renewal year is calculated by considering the discount rate.

[Calculation Method for Expected Profit P]

Next, an example of a calculation method for an expected profit P will be described. A method using the DCF method, which is one of capitalization methods, will be described below. Alternatively, other methods such as the generally known cost method and transaction case comparison method may also be used.

Hereafter, a case of obtaining an expected profit of a target pipeline laid in a certain district (district A) will be described. An expected profit $P_N$ of the pipeline after N years can be calculated by Equation (8).

[Math 8]

$$P_N = \text{annual water usage amount in district A } (\text{m}^3/\text{year}$$

$$\text{and person}) \times \text{unit price } (\text{yen/m}^3) \times \text{population estimated}$$

$$\text{value in district A after N years (person)} \times \text{discount rate}$$

$$(8)$$

·Annual water usage amount (m³/year and person)

The annual water usage amount is an average amount of water used by one person resident in the district A for one year, and can be calculated based on a past actual record of a water usage amount in the district A. An annual water usage amount value in the remaining service years, that is, in the future may be, for example, an actual record value in the latest year as it is, or may be an average value in the past predetermined years (for example, five years). When there is no past actual record value, the water usage amount in a municipality of the same size may also be referred. In addition, the annual water usage amount may be changed over time as necessary under a predetermined assumption (for example, a change in saving consciousness).

·Unit price (yen/m$^3$)

The unit price is an actual water supply unit price (water charge) in the district A. A unit price when calculating a future asset value may be an actual record value in the latest year as it is, or may be an average value in the past predetermined years (for example, five years). When the supply unit price is decided to be changed in the future, a different value may be set for each year.

·Population estimated value (person) in district A after N years

As the population estimated value in the district A after N years, a demographic predicted value in the district A that has been published may usually be used. The district A may be set for each city, each town, each village/county, or each school district according to a purpose of calculating the asset value, and is preferably in a unit by which the estimated population value can be known.

·Discount rate

The discount rate is a coefficient used in the DCF method and used for converting a future value to a current value, and is determined by considering uncertainty of the asset and interest rates. The discount rate may be appropriately set by a user, and is usually set at 1% to 10% (r = 0.01 to 0.1).

When calculating an asset value of a part of pipelines among the pipelines laid in the district A, the discount rate can be calculated by multiplying the above-described Equation (8) by a volume ratio or a length ratio of a target pipeline. For example, in a case in which the pipelines No. 1 to 5 in the pipeline attribute information 211 (FIG. 2) are pipelines in the district A, and a value of the pipeline No. 1 alone is to be obtained, such a value can be obtained as long as Equation (8) is multiplied by a ratio of volume/extension of the pipeline No. 1 to a total volume/extension of the pipelines No. 1 to 5.

When calculating an asset value of a part of pipelines among the pipelines laid in the district A, the expected profit P after N years may be calculated by Equation (9) instead of Equation (8).

[Math 9]

$$P_N = \text{water amount (m}^3/\text{year)} \times \text{population change rate}$$
$$\times \text{ unit price (yen/m}^3) \times \text{discount rate} \qquad (9)$$

·Water amount (m$^3$/year)

The water amount in a pipeline can be calculated by multiplying a cross-sectional area of the target pipeline by a flow velocity of the water flowing through the pipeline. As the flow velocity, a flow velocity reference value in the district A may be used, or the flow velocity may be changed as appropriate according to the situation. When the flow velocity reference value is constant, a correspondence table recording a relationship between the diameter and the water amount may be used. In addition, results of pipe network calculation executed by simulating behavior in a water pipe network may also be used. That is, the water amount may be given as an input value corresponding to the diameter, or may be calculated.

·Population change rate

The population change rate is a rate of population change from a reference year (for example, the present), and can be calculated by dividing the population estimated value in that year by the population in the reference year. A demographic predicted value in the district A that has been published may usually be used.

The unit price and discount rate may be the same as those in the description of Equation (8).

[Assessment of Current Asset Value]

Next, an example of an asset value calculation method for a pipeline will be described. A current asset value Value of the pipeline can be assessed based on an expected profit $P_N$ and a cost $C_N$ (life cycle cost) of the pipeline. The asset value calculation method is not particularly limited, as long as the asset value is calculated based on the expected profit and the cost, and for example, can be calculated by Equation (10) using the discount rate r based on the discounted cash flow (DCF) method, which is one of the capitalization methods.

[Math 10]

$$Value = \sum_{N=0 \sim M} \frac{P_N - CN}{(1-r)^N} \qquad (10)$$

N indicates the number of passed years from a calculation reference year, and M indicates a calculation end year. For example, when N = 0, a life cycle cost from the present can be calculated, and when N = 1, a life cycle cost after one year can be calculated. An end value of N is the calculation end year M. In the assessment of the asset value, the calculation end year M is a period until the calculation of the expected profit P and the cost C is ended, more specifically, is a period (years) from the present until use of a pipeline subjected to the asset value assessment is ended.

$P_N$ is an expected profit (yen/year) in a year when N years have passed from the calculation reference year, $C_N$ is a cost (yen/year) in a year when N years have passed from the calculation reference year, and r is a discount rate used in the DCF method. The asset value may be calculated without considering the discount rate (that is, r = 0), and it is preferable to set r appropriately in order to convert the expected profit P and the cost C in the future into the current asset value (for example, 1% to 10%).

The calculation end year M may be determined by a user depending on a purpose of the asset value assessment, characteristics of the pipeline, and the like, and it is preferable to set the year in which the life cycle cost is minimized as the optimal renewal year, in the LCC curve shown in FIG. 10. In addition, since the running cost increases over time, the calculation end year M may be set such that the calculation is executed until the year in which the expected profit P and the running cost change in magnitude.

(Example 1: Calculation end year M when calculating asset value for each pipeline No.)

When the optimal renewal year is calculated as 100 years based on the calculation of the life cycle cost, for the pipeline No. 1 in the pipeline attribute information 211 (FIG. 2), since the laying year is 2001, the calculation end year is 2100.

Since 20 years have now passed by the present 2020, the present (N = 0) is 2020, the calculation end year (N = M = 80) is 2100, an expected profit P and a cost C of the pipeline No. 1 from 2020 to 2100 are calculated. More specifically, $P_0$ is an expected profit in 2020, $P_1$ is an expected profit in 2021, and $P_2$ is an expected profit in 2022, ..., and $C_0$ is a cost in 2020, $C_1$ is a cost in 2021, and $C_2$ is a cost in 2022, ...

Hereafter, a period from the laying year to the calculation end year (2001 to 2100 in the above-described example) may also be referred to as the "in-service years", a period from the laying year to the present (2001 to 2020 in the above-described example) may also be described as "actual usage years", and a period from the present to the calculation end year (2020 to 2100 in the above-described example) may also be described as the "remaining service years".

(Example 2: Calculation end year M when calculating asset value for each district)

When the pipelines No. 1 to 5 in the pipeline attribute information 211 (FIG. 2) are pipelines in this district, an average value of calculation end years M calculated based on optimal renewal years of these pipelines may be used as a calculation end year. That is, when the pipeline No. 1 has a calculation end year M of 80, the pipeline No. 2 has a calculation end year M of 65, the pipeline No. 3 has a calculation end year M of 83, the pipeline No. 4 has a calculation end year M of 87, and the pipeline No. 5 has a calculation end year M of 55, these calculation final years may be averaged, and a calculation end year M, which is used during the asset value assessment, may be set to be 74.

Next, specifically, an example of calculating the asset value of the pipeline No. 1 will be described.

Referring to the pipeline attribute information 211 (FIG. 2), attributes of the pipeline No. 1 include a diameter of 150 mm, a length of 50 m, a pipe type of DIP, a laying year of 2001, a general joint, and absence of the poly sleeve coating.

Referring to the accident rate model coefficient information 213 (FIG. 4), since this pipeline corresponds to the DIP, the general joint, absence of the sleeve, and (50 to 250 mm), it can be known that C1 = 1, C2 = 1, C3 = 1.5, a = 0.0007, and b = 0.0758. In addition, C4 = C5 = 1. Further, referring to the cost information 214 (FIG. 5), it can be known that, for such a pipeline having the diameter of 150 mm and the pipe type of DIP, a laying cost is 80,300 yen/m, and a repair cost is 350,000 yen/location.

By substituting these numerical values into Equation (6), a water leakage accident rate f(t) is represented by the following equation.

$$f(t) = 0.00105e^{0.0758t}$$

By substituting the numerical values in the water leakage accident information 212 (FIG. 3) into Equation (5) and executing regression analysis, a water leakage amount y is represented by the following equation.

$$y = k2_{DIP} \times x2_{DIP} = 0.8 \ (10,000 \ m^3/case)$$

By substituting the numerical values in the water leakage accident information 212 (FIG. 3) into Equation (4) and executing regression analysis, k1 is obtained as 0.3 (10,000 $m^3$/case) and k2 is obtained as 0.8 (10,000 $m^3$/case). The pipeline No. 1 is a water distribution pipe, thereby having a water leakage loss amount of 0.8.

A laying cost CP of the pipeline No. 1 and a laying cost C_I(T) per unit length (1 km) of the pipeline No. 1 are represented by the following equations.

$$CP = 80300 \ (m^3/case) \times 50 \ (m) = 4,015,000 \ (yen)$$

$$C\_I(T) = CP \times 20 = 80,300,000/T$$

A water leakage loss cost CL of the pipeline No. 1 is calculated by multiplying the water leakage amount y and the supply unit price in the supply unit price and annual water usage amount information 216 (FIG. 7), and is represented by the following equation. In addition, referring to the cost information 214B (FIG. 5), the repair cost CR of such a pipeline having a diameter of 150 mm and a pipe type of DIP is 350,000 yen.

$$CL = 8000 \ (m^3/case) \times 160 \ (yen/m^3) = 1,280,000$$

$$(yen/case)$$

$$CR = 350,000 \ yen/case$$

By substituting these numerical values into Equation (3), a running cost C_R(T) is represented by the following equation, and by substituting these numerical values into Equation (1), a life cycle cost LCC(T) is represented by the following equation.

$$C\_R(T) = 1711.5\Sigma_{t=1 \ to \ T} \ e^{0.0758t}/T = 23445(e^{0.0758T-1})/T$$

$$LCC(T) = C\_I(T) + C\_R(T) = 80,300,000/T + 23445(e^{0.0758T-1})/T$$

When using the above equation, the optimal renewal year in which the life cycle cost LCC(T) is minimized is 111 years, as shown in the LCC curve shown in FIG. 10. The pipeline No. 1 was laid in 2001, and if the present is 2020, the calculation end year is 2112, the actual usage years are 20 years, the remaining service years are 92 years, and the in-service years are 111 years.

The above calculation results are used to calculate costs and profits from 2020 to 2112.

[When r = 0]

When using a straight-line method, the initial cost C_I(T) is represented by the following equation. The initial cost C_I(T) may be calculated using a declining-balance method. In addition, since the pipeline No. 1 has a length of 50 m, a running cost C_R(T) is represented by the following equation. Therefore, the life cycle cost LCC(T) is represented by the following equation.

$$\text{C\_I(T)} = 4,015,000 \text{ yen} \times (92 \text{ years}/111 \text{ years}) \approx 3,330,000 \text{ yen}$$

$$\text{C\_R(T)} = 1711.5\Sigma_{t=1 \text{ to } T} \, e^{0.0758t}/T = 0.05 \times 1711.5\Sigma_{t=20 \text{ to } 111} \, e^{0.0758t} = 5,280,000 \text{ yen}$$

$$\text{LCC(T)} = \text{C\_I(T)} + \text{C\_R(T)} = 3,330,000 \text{ yen} + 5,280,000 \text{ yen} = 8,610,000 \text{ yen}$$

As a parameter for calculating the profit $P_N$ in Equation (8), when the population is constant at 300,000 and does not change and the length of the pipeline is 2000 km, a length ratio of the pipeline No. 1 is 0.05/2000. In addition, when the pipeline No. 1 has an annual water usage amount of 120 and a unit price of 150, a profit $P_N$ is represented by the following equation.

$$P = \text{annual water usage amount in district A } (m^3/\text{year and person}) \times \text{unit price } (\text{yen}/m^3) \times \text{population estimated value in district A after N years (person)} \times \text{discount rate}$$

$$= 120 \ (m^3/\text{year and person}) \times 150 \ (\text{yen}/m^3) \times 300,000 \ (\text{person}) \times 92 \ (\text{year}) \times 0.000025$$

$$= 12,420,000 \text{ yen}$$

Therefore, the asset value Value is represented by the following equation.

$$\text{Value} = 12,420,000 \ (\text{yen}) - 8,610,000 \ (\text{yen}) = 3,810,000 \ (\text{yen})$$

[When r = 0.02]
When using a straight-line method, the initial cost C_I(T) is represented by the following equation. In addition, since the pipeline No. 1 has a length of 50 m, a running cost C_R(T) is represented by the following equation. Therefore, the life cycle cost LCC(T) is represented by the following equation.

$$4,015,000 \text{ yen} \div 111 \approx 36,000 \text{ yen/year (straight-line method)}$$

$$\text{C\_I(T)} = 36000 + (36000 \div 1.02) + (36000 \div 1.022)$$

$$+ \ldots = 1{,}540{,}000 \text{ yen}$$

$$\text{C\_R(T)} = 0.05 \times 1711.5\Sigma_{t=20 \text{ to } 111} \, e^{0.0758t}/(1 + 0.02)t -$$

$$20 = 1{,}160{,}000 \text{ yen}$$

$$\text{LCC(T)} = \text{C\_I(T)} + \text{C\_R(T)} = 1{,}540{,}000 \text{ yen} + 1{,}160{,}000$$

$$\text{yen} = 2{,}700{,}000 \text{ yen}$$

As a parameter for calculating the profit $P_N$ in Equation (8), when the population is constant at 300,000 and does not change and the length of the pipeline is 2000 km, a length ratio of the pipeline No. 1 is 0.05/2000. In addition, when the pipeline No. 1 has an annual water usage amount of 120 and a unit price of 150, a profit $P_N$ is represented by the following equation.

$$P = \text{annual water usage amount in district A } (m^3/year$$

$$\text{and person}) \times \text{unit price } (yen/m^3) \times \text{population estimated}$$

$$\text{value in district A after N years (person)} \times \text{discount rate}$$

$$= 120 \ (m^3/year \ and \ person) \times 150 \ (yen/m^3) \times$$

$$300{,}000 \ (person) \times 0.000025 \ (year \ 0)$$

$$+ \ 120 \ (m^3/year \ and \ person) \times 150 \ (yen/m^3) \times$$

$$300{,}000 \ (person) \times 0.000025 \div 1.02 \ (1st \ year)$$

$$+ \ 120 \ (m^3/year \ and \ person) \times 150 \ (yen/m^3) \times$$

$$300{,}000 \ (person) \times 0.000025 \div 1.022 \ (2nd \ year)$$

$$+ \ldots$$

$$+ \ 120 \ (m^3/year \ and \ person) \times 150 \ (yen/m^3) \times$$

$$300{,}000 \ (person) \times 0.000025 \div 1.0292 \ (92nd \ year)$$

$$= 5{,}770{,}000 \text{ yen}$$

Therefore, the asset value Value is represented by the following equation.

$$\text{Value} = 5{,}770{,}000 \ (yen) - 2{,}700{,}000 \ (yen) = 3{,}070{,}000$$

$$(yen)$$

As described above, the expected profit, the life cycle cost, and the asset value are calculated using the models (equations) for which the plurality of numerical values are taking as parameters. Alternatively, the expected profit, the life cycle cost, and the asset value may also be obtained using an artificial intelligence engine that has learned these parameters as explanatory variables and the expected profit, the life cycle cost, and the asset value as objective variables.

As described above, in the asset value assessment system according to the present embodiment, the control unit 100 uses the pipeline attribute information 211 and the supply unit price and annual water usage amount information 216 to calculate an expected profit of a pipeline, uses the pipeline attribute information 211 and the cost information 214 to calculate a life cycle cost of the pipeline, and assesses an asset value of the pipeline based on the expected profit and the life cycle cost. Therefore, it is possible to appropriately assess the asset value of the pipeline, which is buried underground, and to provide information that contributes to long-term sound continuation of water supply business management based on the information on the asset value.

The control unit 100 uses the water leakage accident information 212 to calculate a water leakage loss amount of the pipeline, and uses the pipeline attribute information 211, the cost information 214, and the water leakage loss amount to calculate the life cycle cost of the pipeline. Therefore, the accuracy of the calculated cost can be improved.

The control unit 100 calculates the life cycle cost by adding an initial cost calculated based on a laying cost and a running cost calculated based on a maintenance and management cost, and therefore, the cost can be calculated accurately.

The control unit 100 assesses the asset value from the present to a calculation end year by taking an optimal renewal year in which the life cycle cost is minimized as the calculation end year, and therefore, it is possible to calculate a life cycle cost in a period until the optimal renewal year close to the actual renewal of the pipeline. In addition, since the life cycle cost increases when calculating a long-term cost, a realistic asset value cannot be assessed. Therefore, a reasonable life cycle cost can be calculated using the optimal renewal year. In addition, the life cycle cost can be calculated within a range in which calculation accuracy and calculation efficiency are well balanced.

The control unit 100 converts a future expected profit into a current expected profit using a discount rate to calculate the expected profit, and converts a future cost into a current cost using the discount rate to calculate the life cycle cost. Therefore, it is possible to calculate an accurate expected profit and an accurate cost.

The control unit uses the demographic information 217 to calculate the expected profit, and therefore, it is possible to accurately calculate increases and decreases in the profit due to increases and decreases in population. In addition, it is possible to calculate an accurate profit by considering water leakage accidents due to population decline.

The invention is not limited to the above embodiment and includes various modifications and equivalent configurations within the spirit of the claims. For example, the embodiment described above has been described in detail for easy understanding of the invention, and the invention is not necessarily limited to those having all the configurations described above. In addition, a part of a configuration according to a certain embodiment may be replaced with a configuration according to another embodiment. In addition, a configuration according to an embodiment may be added to a configuration according to another embodiment. Further, a part of the configuration according to each embodiment may be added to, deleted from, or replaced with another configuration.

Parts or all of the configurations, functions, processing units, processing methods, and the like may be implemented by hardware by, for example designing with an integrated circuit, or may be implemented by software by a processor interpreting and executing a program for implementing the functions.

Information such as a program, a table, a file, or the like for implementing the functions can be stored in a storage device such as a memory, a hard disk, and a solid state drive (SSD), or a recording medium such as an IC card, an SD card, and a DVD.

Control lines and information lines indicate what is considered necessary for description, and not all the control lines and information lines in the products are shown. In fact, it may be considered that almost all the configurations are connected with each other.

**Claims**

1. An asset value assessment system for assessing an asset value of a pipeline, the asset value assessment system comprising:

   a control unit configured to execute predetermined arithmetic processing; and
   a storage device accessible by the control unit, wherein
   the storage device is configured to store a database including attribute information of the pipeline, water supply unit price information, and cost information including a laying cost and a maintenance and management cost of the pipeline, and
   the control unit is configured to

calculate an expected profit of the pipeline using the attribute information and the supply unit price information,
calculate a life cycle cost of the pipeline using the attribute information and the cost information, and
assess the asset value of the pipeline based on the expected profit and the life cycle cost.

2. The asset value assessment system according to claim 1, wherein

the database further includes water leakage accident information including a water leakage number and a water leakage amount of the pipeline, and
the control unit is configured to calculate a water leakage loss amount of the pipeline using the water leakage accident information, and calculate the life cycle cost of the pipeline using the attribute information, the cost information, and the water leakage loss amount.

3. The asset value assessment system according to claim 1, wherein
the control unit is configured to calculate the life cycle cost by adding an initial cost calculated based on the laying cost and a running cost calculated based on the maintenance and management cost.

4. The asset value assessment system according to claim 1, wherein
the control unit is configured to assess an asset value from the present to a calculation end year by taking an optimal renewal year in which the life cycle cost is minimized as the calculation end year.

5. The asset value assessment system according to claim 1, wherein
the control unit is configured to

calculate the expected profit by converting a future expected profit into a current expected profit using a discount rate, and
calculate the life cycle cost by converting a future cost into a current cost using the discount rate.

6. The asset value assessment system according to claim 1, wherein
the attribute information includes a pipe type, a diameter, a length, and a laying year of the pipeline.

7. The asset value assessment system according to claim 1, wherein

the database further includes information on demographics, and
the control unit is configured to calculate the expected profit using the demographics.

8. The asset value assessment system according to claim 1, further comprising:

an output device, wherein
the output device is configured to display an assessment result including the expected profit, the life cycle cost, and the asset value.

9. An asset value assessment method by which a computer assesses an asset value of a pipeline, wherein

the computer includes a control unit configured to execute predetermined arithmetic processing and a storage device accessible by the control unit, and
the storage device is configured to store a database including attribute information of the pipeline, water supply unit price information, and cost information including a laying cost and a maintenance and management cost of the pipeline,
the asset value assessment method comprising:

a step of calculating, by the control unit, an expected profit of the pipeline using the attribute information and the supply unit price information,
a step of calculating, by the control unit, a life cycle cost of the pipeline using the attribute information and the cost information, and
a step of assessing, by the control unit, the asset value of the pipeline based on the expected profit and the life cycle cost.

**10.** The asset value assessment method according to claim 9, wherein
in the step of calculating the life cycle cost, the control unit calculates the life cycle cost by adding an initial cost calculated based on the laying cost and a running cost calculated based on the maintenance and management cost.

**11.** The asset value assessment method according to claim 9, wherein
in the step of assessing the asset value, the control unit assesses the asset value from the present to a calculation end year by taking an optimal renewal year in which the life cycle cost is minimized as the calculation end year.

**12.** The asset value assessment method according to claim 9, wherein

in the step of calculating the expected profit, the control unit calculates the expected profit by converting a future expected profit into a current expected profit using a discount rate, and
in the step of calculating the life cycle cost, the control unit calculates the life cycle cost by converting a future cost into a current cost using the discount rate.

**13.** The asset value assessment method according to claim 9, wherein
the attribute information includes a pipe type, a diameter, a length, and a laying year of the pipeline.

**14.** The asset value assessment method according to claim 9, wherein

the database further includes demographics, and
in the step of calculating the expected profit, the control unit calculates the expected profit using the demographics.

**15.** The asset value assessment method according to claim 9, wherein

the computer further includes an output device,
the asset value assessment method further comprising a step of generating, by the control unit, data for displaying an assessment result including the expected profit, the life cycle cost, and the asset value on the output device.

[FIG. 1]

[FIG. 2]

| PIPELINE No. | DIAMETER (mm) | LENGTH (m) | PIPE TYPE | LAYING YEAR | JOINT TYPE | POLY SLEEVE COATING | TRAFFIC VOLUME (dB) | GROUND | WATER PRESSURE | WATER CONTENT |
|---|---|---|---|---|---|---|---|---|---|---|
| 1 | 150 | 50 | DIP | 2001 | GENERAL | ABSENT | 32 | GOOD | | |
| 2 | 100 | 100 | DIP | 1998 | GENERAL | PRESENT | 49 | GOOD | | |
| 3 | 400 | 200 | DIP | 2005 | GENERAL | ABSENT | 45 | GOOD | | |
| 4 | 75 | 30 | VP | 2003 | GENERAL | ABSENT | 41 | POOR | | |
| 5 | 100 | 400 | DIP | 1982 | GENERAL | PRESENT | 29 | GOOD | | |
| 6 | 150 | 200 | DIP | 1970 | GENERAL | ABSENT | 35 | GOOD | | |
| 7 | 75 | 500 | VP | 1993 | ANTI-SEISMIC | ABSENT | 31 | GOOD | | |
| 8 | 75 | 200 | DIP | 2012 | ANTI-SEISMIC | ABSENT | 43 | POOR | | |
| 9 | 400 | 120 | DIP | 1996 | ANTI-SEISMIC | ABSENT | 51 | GOOD | | |
| . | . | . | . | . | . | . | . | . | | |

PIPELINE ATTRIBUTE INFORMATION 211

[FIG. 3]

| YEAR | | 2016 | 2017 | 2018 | 2019 | 2020 |
|---|---|---|---|---|---|---|
| ANNUAL WATER LEAKAGE AMOUNT (10,000 m³/year) | | 230 | 222 | 223 | 214 | 244 |
| ANNUAL OCCURRENCE NUMBER OF WATER SUPPLY PIPE ACCIDENTS | GROUND LEAKAGE | 345 | 323 | 330 | 319 | 378 |
| | UNDERGROUND LEAKAGE | 33 | 37 | 28 | 29 | 40 |
| ANNUAL OCCURRENCE NUMBER OF PIPELINE ACCIDENTS | GROUND LEAKAGE | 29 | 25 | 27 | 21 | 30 |
| | UNDERGROUND LEAKAGE | 3 | 4 | 3 | 2 | 5 |
| ANNUAL NUMBER OF WATER DISTRIBUTION PIPE ACCIDENTS FOR EVERY TYPE | DIP | 16 | 12 | 14 | 8 | 15 |
| | CIP | 4 | 5 | 3 | 5 | 6 |
| | SP | 3 | 4 | 5 | 3 | 5 |
| | VP | 9 | 8 | 8 | 7 | 9 |

WATER LEAKAGE ACCIDENT INFORMATION 212

[FIG. 4]

| PIPE TYPE AND THE LIKE | C1 | C2 | C3 | a | b |
|---|---|---|---|---|---|
| DIP GENERAL JOINT, SLEEVE IS ABSENT (50-250mm) | 1 | 1 | 1.5 | 0.0007 | 0.0758 |
| DIP GENERAL JOINT, SLEEVE IS ABSENT (300-450mm) | 1 | 0.8 | 1.5 | 0.0007 | 0.0758 |
| DIP GENERAL JOINT, SLEEVE IS ABSENT (500-1000mm) | 1 | 0.2 | 1.5 | 0.0007 | 0.0758 |
| DIP GENERAL JOINT, SLEEVE IS PRESENT (50-250mm) | 0.4 | 1 | 1.5 | 0.0007 | 0.0758 |
| DIP GENERAL JOINT, SLEEVE IS PRESENT (300-450mm) | 0.4 | 0.8 | 1.5 | 0.0007 | 0.0758 |
| DIP GENERAL JOINT, SLEEVE IS PRESENT (500-1000mm) | 0.4 | 0.2 | 1.5 | 0.0007 | 0.0758 |
| DIP ANTI-SEISMIC JOINT (50-250mm) | 0.4 | 1 | 1 | 0.0007 | 0.0758 |
| DIP ANTI-SEISMIC JOINT (300-450mm) | 0.4 | 0.8 | 1 | 0.0007 | 0.0758 |
| DIP ANTI-SEISMIC JOINT (500-1000mm) | 0.4 | 0.2 | 1 | 0.0007 | 0.0758 |
| CIP (75-250mm) | 1 | 1 | 1.5 | 1.91E-12 | 6.502 |
| CIP (300-450mm) | 1 | 0.2 | 1.5 | 1.91E-12 | 6.502 |
| CIP (500-1000mm) | 1 | 0.1 | 1.5 | 1.91E-12 | 6.502 |
| SP (50-150mm) | 1 | 2.8 | 1.3 | 0.0074 | 0.0618 |
| SP (200-450mm) | 1 | 1 | 1.3 | 0.0074 | 0.0618 |
| CIP (500-1000mm) | 1 | 0.3 | 1.3 | 0.0074 | 0.0618 |

ACCIDENT RATE MODEL COEFFICIENT INFORMATION 213

[FIG. 5]

(A)

| DIAMETER/PIPE TYPE | DIP/CIP | SP | VP |
|---|---|---|---|
| 75 | 66600 | 72100 | 67600 |
| 100 | 70100 | 77400 | 70200 |
| 150 | 80300 | 90600 | 78100 |
| 200 | 87600 | 106800 | 82700 |
| 250 | 96900 | 121900 | 92100 |
| . | . | . | . |

LAYING COST INFORMATION 214A          yen/m

(B)

| DIAMETER/PIPE TYPE | DIP/CIP | SP | VP |
|---|---|---|---|
| 75 | 250 | 200 | 200 |
| 100 | 300 | 250 | 200 |
| 150 | 350 | 400 | 250 |
| 200 | 400 | 600 | 300 |
| 250 | 500 | 800 | 350 |
| . | . | . | . |

REPAIR COST INFORMATION 214B     1,000 yen/location

[FIG. 6]

| PIPE TYPE | | WATER LEAKAGE LOSS AMOUNT (10,000 m³/case) |
|---|---|---|
| WATER DISTRIBUTION PIPE | DIP | 0.8 |
| | CIP | 0.9 |
| | SP | 0.8 |
| | VP | 0.6 |
| WATER SUPPLY PIPE | | 0.3 |

WATER LEAKAGE LOSS AMOUNT INFORMATION 215

[FIG. 7]

| YEAR | 2016 | 2017 | 2018 | 2019 | 2020 |
|---|---|---|---|---|---|
| SUPPLY UNIT PRICE (yen/m³) | 160 | 162 | 162 | 165 | 165 |
| ANNUAL WATER USAGE AMOUNT (m³/year and person) | 98 | 96 | 101 | 99 | 95 |

SUPPLY UNIT PRICE AND ANNUAL WATER USAGE AMOUNT INFORMATION 216

[FIG. 8]

| YEAR | 2020 | 2021 | 2022 | 2023 | 2024 | · |
|---|---|---|---|---|---|---|
| POPULATION (person) | 350000 | 330000 | 310000 | 300000 | 290000 | · |

DEMOGRAPHIC INFORMATION 217

[FIG. 9]

USER: INPUT PIPELINE No. AND THE LIKE — 10

CONTROL UNIT: READ DATA SERIES BASED ON PIPELINE No. — 11

12 — CONTROL UNIT: EXECUTE EXPECTED PROFIT CALCULATION

CONTROL UNIT: EXECUTE LCC CALCULATION — 13

CONTROL UNIT: ASSESS PIPELINE ASSET VALUE — 14

DISPLAY DEVICE: DISPLAY ASSESSMENT RESULTS — 15

[FIG. 10]

**LCC CURVE**

OPTIMAL RENEWAL YEAR = 111

**INTERNATIONAL SEARCH REPORT**

| International application No. |
| --- |
| PCT/JP2021/008830 |

A. CLASSIFICATION OF SUBJECT MATTER
Int. Cl. G06Q50/06(2012.01)i
FI: G06Q50/06

According to International Patent Classification (IPC) or to both national classification and IPC

B. FIELDS SEARCHED

Minimum documentation searched (classification system followed by classification symbols)
Int. Cl. G06Q50/06

Documentation searched other than minimum documentation to the extent that such documents are included in the fields searched
Published examined utility model applications of Japan      1922-1996
Published unexamined utility model applications of Japan    1971-2021
Registered utility model specifications of Japan            1996-2021
Published registered utility model applications of Japan    1994-2021

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 2006-236162 A (KABUSHIKI KAISHA KANSOKEN) 07 September 2006, abstract | 1-15 |
| A | JP 2009-48384 A (HITACHI, LTD.) 05 March 2009, abstract | 1-15 |

☐ Further documents are listed in the continuation of Box C.          ☒ See patent family annex.

| | |
| --- | --- |
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| 18.05.2021 | 01.06.2021 |

| Name and mailing address of the ISA/ <br> Japan Patent Office <br> 3-4-3, Kasumigaseki, Chiyoda-ku, <br> Tokyo 100-8915, Japan | Authorized officer <br><br> Telephone No. |

Form PCT/ISA/210 (second sheet) (January 2015)

INTERNATIONAL SEARCH REPORT
Information on patent family members

International application No.

PCT/JP2021/008830

| Patent Documents referred to in the Report | Publication Date | Patent Family | Publication Date |
|---|---|---|---|
| JP 2006-236162 A | 07.09.2006 | (Family: none) | |
| JP 2009-48384 A | 05.03.2009 | (Family: none) | |

Form PCT/ISA/210 (patent family annex) (January 2015)

**EP 4 170 575 A1**

**REFERENCES CITED IN THE DESCRIPTION**

**Patent documents cited in the description**

- JP 2020107464 A
- JP 2015090641 A
- JP 2016033808 A